# EUROPEAN PATENT APPLICATION

(11) **EP 2 808 816 A1**
(43) Date of publication of application: **03.12.2014**
(21) Application number: 13305696.0
(22) Date of filing: 28.05.2013
(51) Int. Cl.: G06F 21/10

(54) **Selective reading in a digital publication**

(71) Applicant: Actialuna SAS, 75001 Paris (FR)
(72) Inventor: Petit, Samuel, 75016 Paris (FR)
(74) Representative: Giovannini, Francesca

(57) **Abstract**

According to a first aspect, the invention relates to a method for selective reading in a digital publication by a user using a reader (R, C), wherein the digital publication comprises pages with locked content, the method comprising:
- Receiving a page selection (S2) from an overview of a pre-selection of the digital publication;
- When the selected page is a page with locked content, authorizing a display of the content of the selected page according to a quota;
- Displaying the content of the selected page (S4) if the display is authorized;
- Updating the quota (S33) upon the page with locked content displayed.

## Description

### FIELD OF THE INVENTION

The invention relates to the field of digital publishing and electronic books. More specifically the invention deals with managing excerpts in a digital publishing.

### BACKGROUND OF THE INVENTION

Many researches in electronic book systems aim at reproducing the real life experience in a digital world. One issue with electronic books is that it is not possible to get a glance at an electronic book before buying it. The possibility, in a real bookstore, to open a book, browse through its pages, even read some pages, is not reproduced in digital world. On most platforms, publications and their excerpts are treated as separate entities. This implies to manage two distinct data sources. Another issue is how to take advantage of the multimedia possibilities of an electronic book in excerpts, and for a preview to benefit from the reading experience. This involves going beyond the production of mere snapshots of the publication as it is rendered by the reader interface.

The patent application document EP2426596A1 discloses a system for reading digital books that can display content with no protection as well as content with protection according to a protection policy. For a given user, a content with no protection can be freely displayed and a content with protection is definitely protected from display.

The patent document US8185444B1 discloses a system for reading digital books that can display protected content after activation by the user via a purchase of reading time and within the allocated time period.

There remains a need however for improved digital book systems, in particular with respect to pre-visualization.

### SUMMARY OF THE INVENTION

An object of the present invention is to alleviate the above mentioned drawbacks.

More particularly, and according to a first aspect, the invention relates to a method for selective reading in a digital publication by a user using a reader, wherein the digital publication comprises pages with locked content, the method comprising:
- Receiving a page selection from an overview of a pre-selection of the digital publication;
- When the selected page is a page with locked content, authorizing a display of the selected page according to a quota;
- Displaying the content of the selected page if the display is authorized;
- Updating the quota upon the page with locked content displayed.

Advantageously, the invention enables the user to unlock an amount of pages related to a quota, in the purpose of getting a glance without buying an electronic book. In other words, the limitation for accessing pages out of purchase is based on the number of pages with locked content accessed by the user and not on the quality of the display of the content. The user may thus have a full access to a given number of pages of a digital book to be previewed, and is not limited by a time limit.

Preferred embodiments comprise one or more of the following features:
- Downloading display resources on the reader;
- Encrypting at least part of the display resources downloaded on the reader;
- Downloading the overview of a pre-selection of the digital publication on the reader;
- Authenticating the user;
- Reading the quota upon user authentication;
- Enabling a purchase of quota by the user;
- Updating the overview of the pre-selection of the digital publication on the reader after display if the selected page is a page with locked content;
- The pre-selection of the digital publication may be based upon community preferences;
- The pre-selection of the digital publication may be based upon a user search.

According to a second aspect, the invention relates to a system for reading by a user using a reader in a digital publication, wherein the digital publication comprises pages with locked content, the system comprising:
- A selection unit adapted for the selection of a page from an overview of a pre-selection of the digital publication;
- A control unit adapted to authorize the display of the selected page according to a quota, if the selected page is a page with locked content;
- A display unit adapted to display the selected page if the display is authorized;
- A quota unit adapted to update the quota upon the page with locked content displayed.

Advantageously, the present invention enables to individualize the management of electronic book preview by the individualization of the dynamic management of quota related to electronic book preview.

Furthermore, the present invention enables to manage a unique data source and system for both the entire electronic book and the excerpts.

Preferred embodiments comprise one or more of the following features:
- Adaptation for the system to enable the user to purchase quota;
- Adaptation for the selection unit to update the overview of a pre-selection of the digital publication on the reader after display of a page with locked content;
- The system further comprising a resource unit adapted to download display resources on the reader;
- Adaptation for the resource unit to download the overview of a pre-selection of the digital publication on the reader;
- The system further comprising a security unit adapted to encrypt at least part of the display resources downloaded on the reader;
- Adaptation for the security unit to authenticate the user;

Further features and advantages of the invention will appear from the following description of embodiments of the invention, given as non-limiting examples, with reference to the accompanying drawings listed hereunder.

### BRIEF DESCRIPTION OF THE DRAWINGS

Fig.1 shows a diagram of a use case of the method according to an embodiment of the present invention.
Fig.2 shows a physical architecture of a system according to an embodiment of the present invention.
Fig.3 shows a diagram of a the general scheme of the modules according to an embodiment of the present invention.
Fig.4A shows a diagram of a scheme with selection unit according to an embodiment of the present invention.
Fig.4B and Fig.4C are digital book overview images according to an embodiment of the present invention.
Fig.5 shows a diagram of a quota unit according to an embodiment of the present invention.
Fig.6 is an exemplary embodiment of the resource downloading workflow according to an embodiment of the present invention.

### DETAILED DESCRIPTION OF THE INVENTION

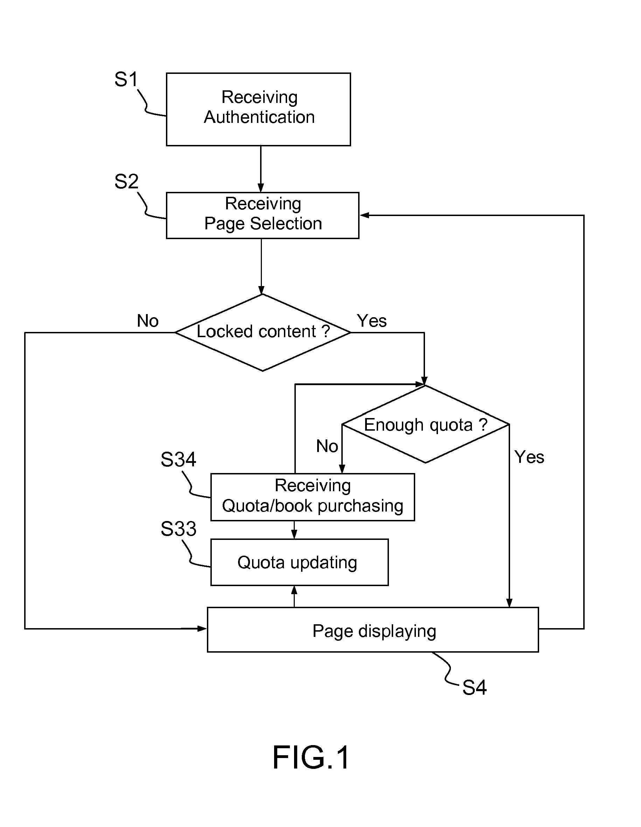

Fig.1 shows a diagram of a use case of the method according to an embodiment of the present invention. The method according to Fig.1 comprises a receiving authentication event S1, a receiving selection event S2, a page displaying step S4, a receiving quota/book purchasing event S34 and a quota updating step S33. The generic process will be triggered at the receiving selection event S2 after the user has requested a page display of a digital book from a reader R or from a client host C. A page with no locked content will be directly taken to the display step S4. A page with locked content will go through quota consuming and quota updating at quota updating step S33. Alternate to a pure refusal in case of insufficient quota allocated to the user, the method can comprise a receiving quota/book purchasing stage, wherein the user is offered to buy additional quota. The user may also be offered to buy the digital book. Quota purchasing will also imply quota updating at a quota updating step S33. If there are enough quotas, then the display is authorized and the displaying step S4 is called. If there are not enough quotas, then the direct display is refused. After purchase of quota, the method may jump back from the receiving quota/book purchasing stage to check if there are now enough quotas to display the page selection at the displaying step S4. The process for a digital book pre-visualization as shown in figure 1 also comprises a receiving authentication event S1. The receiving authentication event S1 may occur at connection, but it may also occur at different stages when necessary. However, the present invention is not limited to pure user management logic, and is also compatible with session management logic systems, where an amount of quota can be allocated for a session, with no need for user authentication. For example, there may be a quota for a non-authenticated user connected to the system with reader and/or session identification, and a quota with a higher credit for an authenticated user. This may encourage membership registration in the digital publishing system.

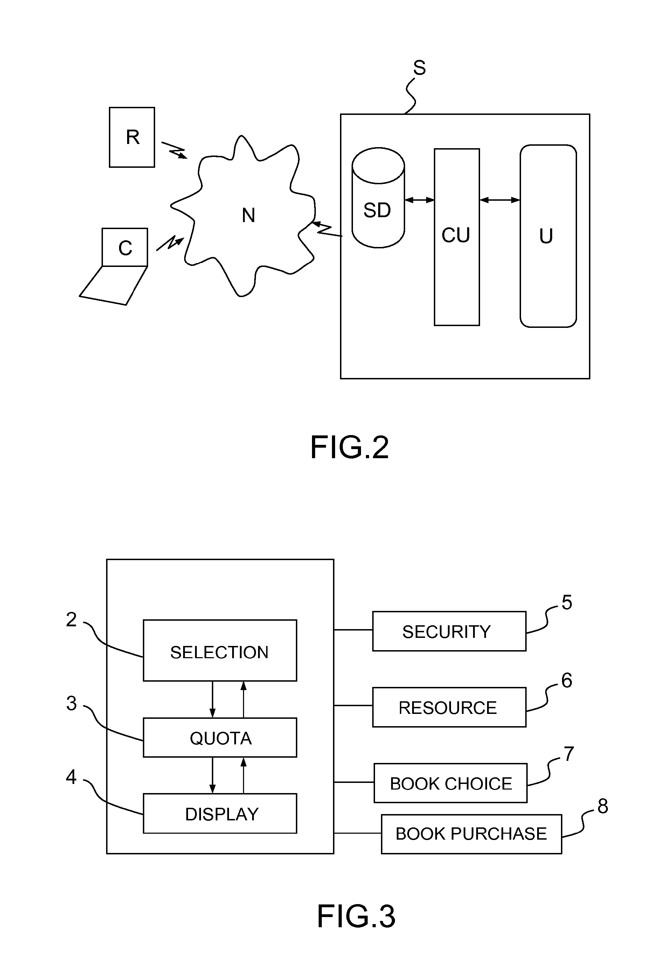

Fig.2 shows a general physical architecture of a system according to an embodiment of the present invention. The architecture according to Fig.2 comprises a network N, a system server S and one or a plurality of electronic devices adapted to be connected to the system through the network, comprising for example a specific reader R dedicated to reading digital books and a personal computer serving as a client host C. The reader R and the client host C can be logged to the system server S through the network N. The user can be retrieved through reader R identification when the connection to the server system S is made with the reader R, but can also be retrieved through user identification from a client host C which can be any computer not dedicated to reading digital books.. In the following, the wording "reader" will be used for representing both a specific reader dedicated to reading digital books and a client host C. The system server S comprises one or several databases SD and a plurality of units U used for implementing the method according to the present invention. The plurality of units U is controlled by the control unit CU all over the process. The control unit CU can request the database for some data when needed. For example information data about users' quotas or books are contained in the databases SD.

Fig.3 shows a diagram of the general scheme of the plurality of units according to an embodiment of the present invention.

The general scheme can be logically divided into operating means operable for a basic reading of a page preview and utility means optionally operable.

The operating means according to an embodiment of the invention are a selection unit 2, a quota unit 3 and a display unit 4. The operating means cooperate together within a page preview scenario and can call one or several utility means one or several times. The utility means according to an embodiment of the invention are a security unit 5, a resource unit 6, a book choice unit 7 and a book purchase unit 8. The utility can be called at several stages of the page preview scenario. The quota unit 3 can communicate with the security unit 5 for example to authenticate the user. The quota unit 3 further communicates with the display unit 4 to authorize the display of the requested page when quota is allowable.

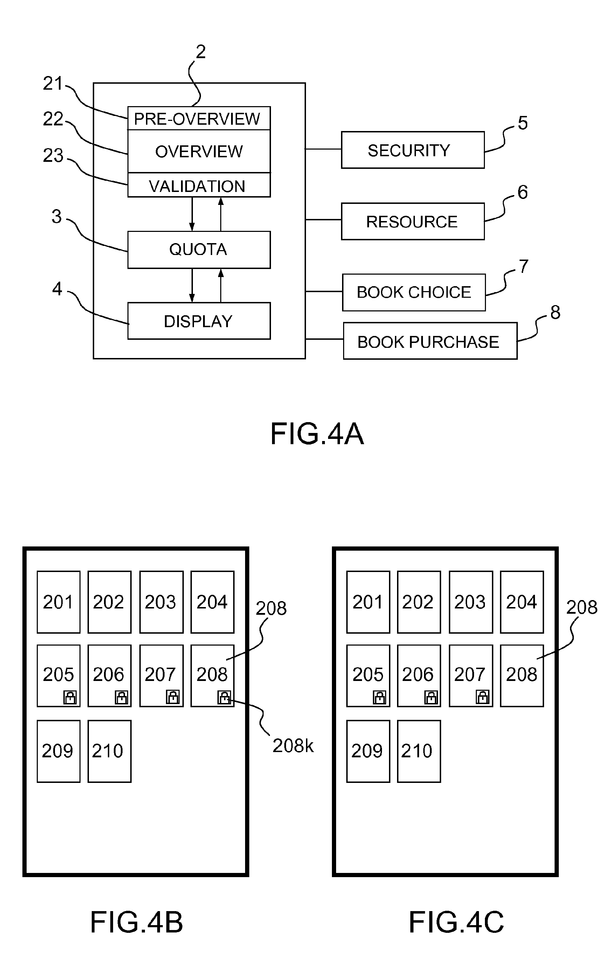

Fig.4A shows a diagram of a scheme with a selection unit 2 according to an embodiment of the present invention.

The selection unit 2 comprises a pre-overview sub-unit 21, an overview sub-unit 22 and a validation sub-unit 23.

The pre-overview sub-unit 21 can be used to choose between different overview contents. For example the user search can be made through an integrated search engine using keywords. Alternatively, a user search can be made through an integrated search engine using categories, for example "pages with images" or "first page of chapters". Alternatively the pre-overview sub-unit 21 can enable a user to select pages upon community preferences. For example the pre-overview sub-unit can determine which pages are to be put to the preview selection upon the community users' declarations of interest.

The overview sub-unit 22 is responsible for the presentation of the overview. For example, pages are first displayed as thumbnails, in an overview representation of the book by the overview sub-unit 22. The overview sub-unit 22 can be a client side component, managing the user interface for page request by the user. The overview sub-unit 22 can further display information like remaining quotas or quotas corresponding to a given page. During the overview, the selection unit 2 may distinguish between pages with locked content and pages without locked content by attaching to pages with locked content lock constraints. Fig.4B and Fig.4C show digital book pre-overview images according to an embodiment of the present invention. In Fig.4B and Fig.4C, pages with locked contents are indicated with a padlock. For example, page 208 on Fig.4B comprises a padlock 208k to show that page 208 is a page with locked content. After page 208 has been selected and displayed and after quota has been updated, the padlock 208k on page 208 is removed (figure 4C), meaning that page 208 is now a free access page for the user. In another embodiment, different types of padlocks or padlocks with different colors may be utilized, for example to differentiate between different categories of pages with locked contents. The digital book may comprise pages which can be read only after purchase of the digital publication. In that case, in the overview of a pre-selection of such digital publication, a padlock corresponding to such type of pages can be different or have a different color than a padlock corresponding to pages with lockable content that can be previewed without necessarily being purchased.

The user selection of a page using the overview sub-unit 22 will be handled by the validation sub-unit 23. The selection unit 2 is thus responsible for receiving a user's selection of pages from an overview of a pre-selection of the digital publication. The selection unit 2 can decide through the validation sub-unit 23 to communicate directly with the display unit 4 if the selection does not contain pages with locked content.

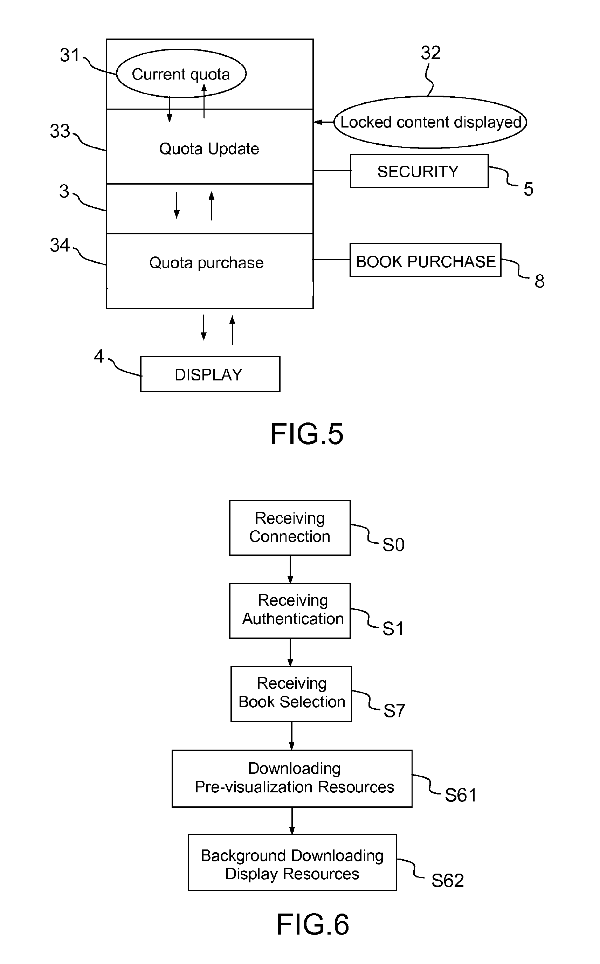

Fig.5 shows a diagram of a quota unit 3 according to an embodiment of the present invention.

The quota is a credit a user is allocated to access pages with locked content and is updated according to the pages of locked content displayed. The quota may be for example defined as a number of pages a user is allowed to unlock. However, all the pages may not be allocated the same quota, so that the quota consumed by a user may depend also on the content of the pages. For each user and for each digital book, an initial quota can be defined that will be reduced through the reading of pages with locked contents by the user. The quota may also be incremented through additional quota purchase. If a digital book is purchased by a user, the associated quota is not managed anymore by the system as the display of any pages of the digital book purchased is free.

The quota unit 3 may comprise for example a quota update sub-unit 33 and a quota purchase sub-unit 34. The quota update sub-unit 33 aims at updating the current quota 31 as a function of the quota consumed after a display 32 of a page with locked content. The quota update sub-unit 33 can call for the quota purchase sub-module 34 in case of insufficient current quota 31. The quota update 33 can be called by the quota purchase sub-unit 34 after the user has bought additional quota or after the user has bought the entire book through the book purchase unit 8.

The quota update sub-unit 33 further communicates with a user profile table The user profile table can store user information, status and usage information. The user profile table can be further utilized for usage reporting and quota updates following readings, granted benefits, promotions or purchases.

Quotas can be also updated with external additional quota, that may comprise for example promotions, marketing initiatives comprising sponsored content.

With this quota management method, the present invention enables the user to unlock an amount of pages according to his/her quota, in the purpose of getting a glance without buying an electronic book and has a full reading experience of the content of the unlocked pages, thus getting a precise idea of the electronic book he/she might purchase.

The display unit 4 according to an embodiment of the present invention can be responsible for displaying or not the selected page according to the page statutes and the user quota. A page statute can be locked, which means that reading that page will impact the user quota; or the page statute can be unlocked which means that reading this page will not impact the user quota. After a display of a page has been requested and after the quota unit 3 has given its authorization, the display unit 4 is accessed. The display of a page can use the display tools like zooming or focusing. But the display unit 4 can also take advantage of the multimedia possibilities like navigation links. For example the display unit 4 can lead the user to an interface where the user will give his appreciation on the page displayed, so the user can participate to the community. Thus the user can be given the possibility to call for another page with locked content from the display unit 4. This explains why there may be several back and forth between the display unit 4 to the quota unit 3, as each display will imply to check for sufficient quota, and to update the value of current quota 31.

Pages according to some embodiments of the present invention encompass any stream from the server to the client which can be offered for reading to the reader. Such stream can comprise any of multimedia content like texts, images, videos, sounds, programs. Differently from a physical book page, a digital book page can comprise as many items as desired. On a page according to some embodiments of the present invention, only some items may be locked. Displaying such page with locked content can imply to display only unlocked content and to hide locked content. Alternatively, any item of a page with locked content may be displayed only if the user has enough quotas to unlock the page.

The resource unit 6 can be responsible for the downloading of the display resources on the reader and/or for the downloading of the overview of a pre-selection of the digital publication on the reader. For example, following the user request of a book through the book choice unit 7, the book content may be streamed from the server to the reader. All resources needed to render the pages may be downloaded by the client application, aiming notably at anticipating at best the reader next moves or requests. Accordingly, the downloaded resources can comprise the bookstore catalogue resources, the publication resources, the not encrypted pre-overview resources with book pages and lock constraints as well as the display resources. However, in some embodiments, no download of the display resources or overview of pre-selection are made on the reader R. In that case the reader will utilize the display resources installed on the server side. When downloading resources on the reader, the resource unit 6 according to the invention can advantageously utilize the encryption and decryption as specified below to limit the back and forth between the server and the reader. For example, pages thumbnails of an overview representation of the book are first downloaded. Full content of pages can be downloaded in the background by the resource unit 6, the priority being transferred on pages whose thumbnails are presently visible on screen.

Fig.6 is exemplary embodiment of the resource downloading workflow according to the present invention. Fig.6 comprises a receiving connection event S0, the receiving authentication event S1, a receiving book selection event S7, a downloading pre-visualization resources step S61 and downloading display resources step S62. The resources downloading process of Fig.6 comprises a step of downloading pre-visualization resources S61 and a step of downloading display resources S62. Preferably, the display resources are encrypted at the step of downloading display resources S62. The resources downloading process can be triggered by the event of receiving a book selection S7. Preferably, the resources downloading process will rely on the events of receiving connection S0 and the events of receiving authentication S1.

With the resource management according to the present invention, it is advantageously possible to manage a unique data source and system for both the entire electronic book and the excerpts.

In a preferred embodiment, the connection resource downloading can be made via Secure Sockets Layer (SSL) which is a standard security protocol for establishing a secure data transfer between a server and a client to securely transfer needed resources on the reader R.

The security unit 5 can be responsible for securing the transfer of the resources and for encrypting at least part of the resources downloaded on the reader R. The encryption can favor the downloading of a big amount of pages with locked content on the reader R to limit the back and forth between the reader R and the bookstore server. In that case there will be a decryption before the eventual display. This can be advantageous for performance improvement sake. An exemplary page resources encryption/decryption may work as following: Each requested page can be treated as a distinct input. Each page with locked content downloaded on the reader R may be coupled to a specific encryption key generated by the system at downloading. Each display authorization by the quota unit 3 may be coupled to a decryption key corresponding to the generated encryption key. The decryption key is used by the reader R to decrypt the page with locked content for its display. The encryption/decryption system prevents from getting around the quota unit 3. The encryption/decryption process according to a preferred embodiment can be a symmetric key encryption system wherein the same secret key is used for encryption and decryption.

The security unit 5 may further be responsible for authenticating the user and authorizing or not to display the page selections upon user authentication. Depending on the security policy, authentication can be made at several stages of reading session. The quota may be linked to the reader or to the user. For example when the digital bookstore is accessed from a not identified computer, the authentication can be based upon user identification. Anyway, with the authentication system according to the present invention, it becomes possible to individualize the management of electronic book preview by the individualization of the dynamic management of quota related to electronic book preview. The security management encompasses digital right management aiming at controlling the resources once they have been downloaded on the reader. Thus downloaded resources can be prevented from being used in other readers or within other programs out of the quota system.

The book choice unit 7 shown in figure 3 can comprise a navigation system throughout the bookstore content. The book choice unit 7 can show the list of available books and allow browsing through categories and brands and searching. The list of available books can change dynamically, depending on various parameters like dates or user country. The book choice unit 7 can comprise searching functionalities through the bookstore. In an embodiment, searching functionalities can allow searching with lists on one or several indicators among which books categories, editors, titles, authors or text available on books meta-data. The book choice unit 7 may communicate with the selection unit 2. Alternatively, the book choice unit 7 may be part of the selection unit 2.

The book purchase unit 8 can be called at several stages of the pages preview process. In relation with a preferred embodiment of the present invention, the book purchase unit 8 can be called by the quota unit 3 in case of insufficient quota. In that case the book purchase unit 8 may provide an alternative choice to the user to have access to the locked pages. The book purchase unit 8 enables the user to buy the entire book during the page preview process. When the purchase is completed, the quota unit 3 will get the information from the book purchase unit 8 and will unlock all the pages of the given book. In some embodiments, the book purchase process can comprise to reduce the cost of quota consumed 32 to the price of the book purchased, so that the book will not be more expensive as a whole when the book purchase unit 8 is called after the quota purchase sub-module 34.

The invention provides an improvement of the user experience in a digital bookstore. It helps for a better understanding of the subject matter of the digital publication before any purchase and for a better apprehension of the selected work. The system according to the present invention can easily be adapted to other lecture environments than a sale platform, e.g. digital libraries where a digital book is not purchased but hired.

Practically, the system for selective reading in a digital publication according to the present invention can comprise a computer program product adapted to cause execution of the control unit CU and the plurality of units of the digital book system.

The invention has been described with reference to preferred embodiments. However, many variations are possible within the scope of the invention.

## Claims

1. Method for selective reading in a digital publication by a user using a reader (R, C), wherein the digital publication comprises pages with locked content, the method comprising:
- Receiving a page selection (S2) from an overview of a pre-selection of the digital publication;
- When the selected page is a page with locked content, authorizing a display of the content of the selected page according to a quota;
- Displaying the content of the selected page (S4) if the display is authorized;
- Updating the quota (S33) upon the page with locked content displayed.

2. Method for selective reading in a digital publication according to claim 1 further comprising:
- Downloading display resources (S62) on the reader.

3. Method for selective reading in a digital publication according to claim 2 further comprising:
- Encrypting at least part of the display resources downloaded on the reader.

4. Method for selective reading in a digital publication according to any preceding claim, further comprising:
- Downloading the overview of the pre-selection of the digital publication on the reader.

5. Method for selective reading in a digital publication according to any preceding claim further comprising:
- Authenticating the user (S1);
- Determining the quota upon user authentication.

6. Method for selective reading in a digital publication according to any preceding claim, further comprising:
- Enabling a purchase of quota by the user (S34).

7. Method for selective reading in a digital publication according to any preceding claim, further comprising:
- Updating the overview of the pre-selection of the digital publication on the reader upon display of a page with locked content.

8. Method for selective reading in a digital publication according to any preceding claim, wherein:
- The pre-selection of the digital publication is based upon community preferences.

9. Method for selective reading in a digital publication according to any of claims 1 to 7 wherein:
- The pre-selection of the digital publication is based upon a user search.

10. System for reading in a digital publication by a user using a reader (R, C), wherein the digital publication comprises pages with locked content, the system comprising:
- A selection unit (2) adapted for the selection of a page from an overview of a pre-selection of the digital publication;
- A control unit (CU) adapted to authorize, if the selected page is a page with locked content, the display of the selected page according to a quota ;
- A display unit (4) adapted to display the selected page if the display is authorized;
- A quota unit (3) adapted to update the quota upon the page with locked content displayed.

11. System for selective reading in a digital publication according to claim 10, wherein said quota unit (3) is further adapted:
- To enable the user to purchase quota.

12. System for selective reading in a digital publication according to any of claims 10 to 11, wherein:
- The selection unit (2) is further adapted to update the overview of a pre-selection of the digital publication on the reader after display of a page with locked content.

13. System for selective reading in a digital publication according to any of claims 10 to 12, further comprising a resource unit (6) adapted:
- To download display resources and/or the overview of a pre-selection of the digital publication on the reader.

14. System for selective reading in a digital publication according to any of claims 10 to 13, further comprising a security unit (5) adapted:
- To authenticate the user.

15. System for selective reading in a digital publication according to claims 10 to 14 further comprising a security unit (5) adapted:
- To encrypt at least part of the display resources downloaded on the reader (R).
